# EUROPEAN PATENT APPLICATION

(11) **EP 4 647 275 A1**
(43) Date of publication of application: **12.11.2025**
(21) Application number: 25174985.9
(22) Date of filing: 08.05.2025
(51) Int. Cl.: B60C 11/13, B60C 11/12, B60C 11/03

(54) **HEAVY DUTY TIRE**

(30) Priority: 08.05.2024 KR 20240060698
(71) Applicant: HANKOOK TIRE & TECHNOLOGY CO., LTD, Gyeonggi-do 13494 (KR)
(72) Inventor: KANG, Sangbeom, 34127 Yeseong-gu, Daejeon (KR); KIM, Yongkeun, 34127 Yeseong-gu, Daejeon (KR)
(74) Representative: Witte, Weller & Partner Patentanwälte mbB

(57) **Abstract**

There is provided a heavy duty tire having at least one groove (110) formed in a tread, comprising: a reinforcement rib (120) inserted between a first sidewall (111) and a second sidewall (112) provided on both sides of the groove (110) and coupled to a bottom surface (110a) of the groove (110); and a hidden groove (170,130, 140) formed between the first sidewall (111) or the second sidewall (112) and the reinforcement rib (120).

## Description

### [Technical Field]

The present invention relates to a heavy duty tire, and more particularly, to a heavy duty tire capable of enhancing the pattern stiffness of a tread and efficiently preventing irregular wear.

### [Background Art]

Generally, a tread of a pneumatic heavy duty tire for vehicles is provided with a plurality of grooves to secure various performances such as drainage performance, braking performance, and heat generation control. Due to these grooves, multiple blocks (or ribs) may be defined.

However, when the tire runs, cracks may occur at portions where the floor and the wall surface of a block meet within the groove. The main causes of these groove cracks are the occurrence of excessive lateral force on the tread blocks depending on the usage conditions of the vehicle and the state of the road surface.

Specifically, cracks may occur in the groove due to excessive forces generated by uneven road surfaces, fatigue and impact transmitted to the tire during driving, or foreign objects such as stones getting stuck in the groove and gradually penetrating inward, leading to deterioration in the quality and performance of the tire.

To address this, conventional techniques have proposed inserting a reinforcement rib inside the groove to prevent cracks at the corners where the groove's sidewalls and bottom meet, thereby suppressing irregular wear and enhancing the overall tread stiffness.

Nevertheless, when the reinforcement rib is positioned within the groove formed in the tread, the groove area is initially reduced during early wear, leading to decreased drainage performance. Although the hidden grooves improve drainage performance in the mid to late stages of wear, the overall tread stiffness decreases compared to the early stage, and irregular wear may occur.

### [Disclosure]

### [Technical Problem]

The present invention provides a heavy duty tire capable of preventing crack occurrence by coupling a reinforcement rib to the groove and enhancing the pattern stiffness of the tread.

The present invention provides a heavy duty tire capable of maintaining the pattern stiffness of the tread even in the mid-to-late stages of tire wear.

The present invention provides a heavy duty tire capable of efficiently preventing irregular wear by allowing the reinforcement rib to absorb forces generated between ribs during vehicle driving or braking.

The present invention provides a heavy duty tire capable of maintaining tread pattern stiffness because the reinforcement rib remains between the ribs even after mid-stage wear, thereby preventing the ribs from contacting each other.

### [Technical Solution]

According to an aspect of the present invention, there is provided a heavy duty tire having at least one groove formed in a tread, comprising: a reinforcement rib inserted between a first sidewall and a second sidewall provided on both sides of the groove and coupled to a bottom surface of the groove; and a hidden groove formed between the first sidewall or the second sidewall and the reinforcement rib.

The hidden groove may include a first hidden groove formed between a portion of the first sidewall and the reinforcement rib, and a second hidden groove formed between a portion of the second sidewall and the reinforcement rib.

At least a portion of the reinforcement rib may be configured to contact the first sidewall and the second sidewall.

The first sidewall may include a first contact portion configured to be in contact with the reinforcement rib and having a curved shape corresponding to a shape of the reinforcement rib so that the reinforcement rib can be inserted into an upper portion of the first sidewall, and a first flow passage spaced apart from the reinforcement rib by a predetermined distance, through which fluid can flow.

Similarly, the second sidewall may include a second contact portion configured to be in contact with the reinforcement rib and having a curved shape corresponding to a shape of the reinforcement rib so that the reinforcement rib can be inserted into an upper portion of the second sidewall, and a second flow passage spaced apart from the reinforcement rib by a predetermined distance, through which fluid can flow.

The first hidden groove may be communicated with the first flow passage and the second flow passage so that fluid can flow therethrough.

The second hidden groove may be communicated with the first flow passage and the second flow passage so that fluid can flow therethrough.

A height of the reinforcement rib may be 70% to 95% of a height of the groove.

The tread may comprise a first rib and a second rib defined by the groove on the surface of the tread.

A distance between the first rib and the second rib may be 1% to 50% of a width of the groove in which the first hidden groove and the second hidden groove are formed.

The first hidden groove and the second hidden groove may be configured to be exposed to the outside when the wear rate of the heavy duty tire reaches 50% to 60%.

### [Description of Drawings]

FIG. 1 is a perspective view showing a tread of a heavy duty tire according to an embodiment of the present invention.
FIG. 2 is a side view of the tread of the heavy duty tire according to an embodiment of the present invention.
FIG. 3 is a cross-sectional view of the tread of the heavy duty tire according to an embodiment of the present invention.
FIG. 4 is an enlarged view showing a partial cross-section of FIG. 3.
FIG. 5 is a perspective view showing the tread of the heavy duty tire according to an embodiment of the present invention in a worn state.

### [Modes of the Invention]

Hereinafter, an embodiment of the present invention will be described in detail with reference to the accompanying drawings. The following embodiment is presented to sufficiently convey the spirit of the present invention to those skilled in the art to which the present invention pertains. The present invention is not limited to the embodiment described herein and may be embodied in other various forms. The drawings omit portions irrelevant to the description for clarity, and the sizes of components may be exaggerated for better understanding.

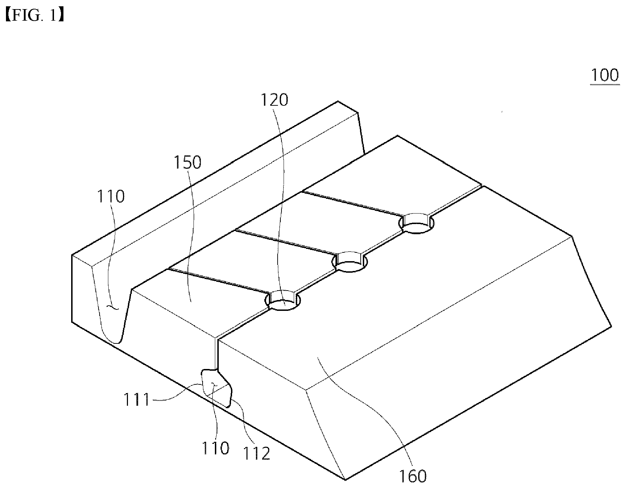

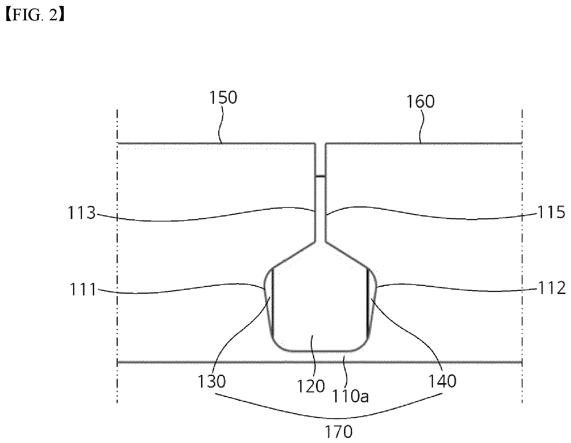

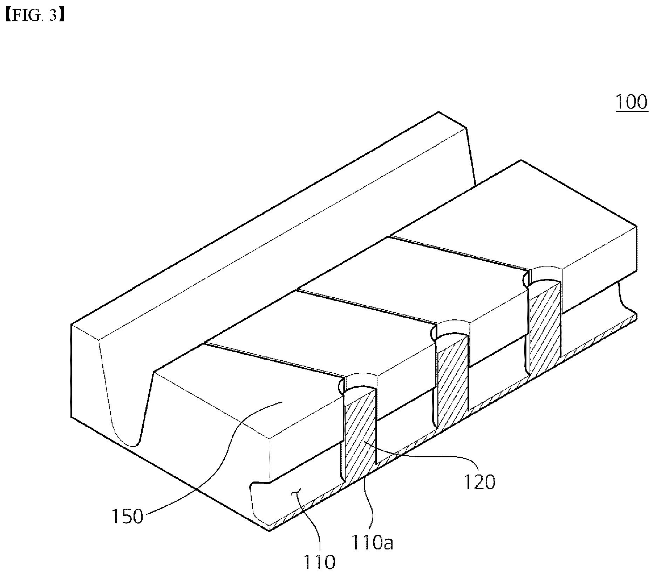

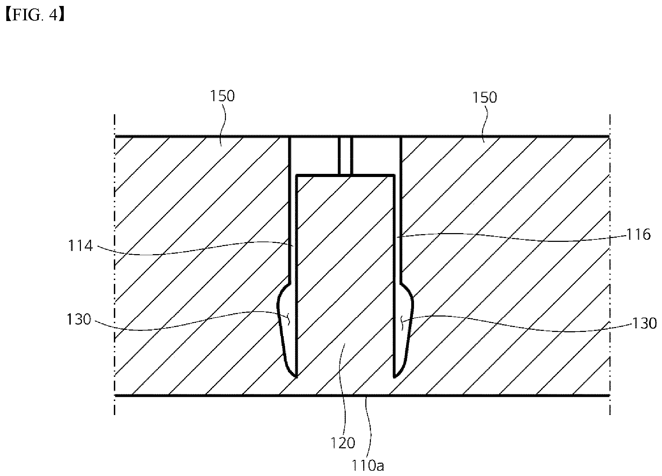

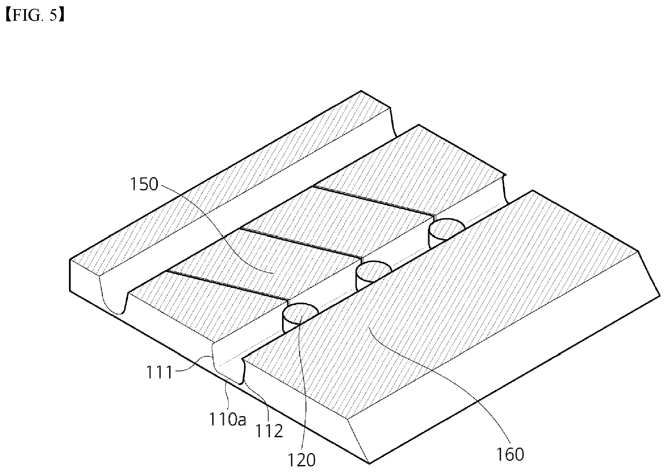

FIG. 1 is a perspective view illustrating a tread (100) of a heavy duty tire according to an embodiment of the present invention, FIG. 2 is a side view illustrating the tread (100) of the heavy duty tire, FIG. 3 is a cross-sectional view illustrating the tread (100) of the heavy duty tire, FIG. 4 is an enlarged partial cross-sectional view of FIG. 3, and FIG. 5 is a perspective view illustrating the tread (100) of the heavy duty tire in a worn state.

The heavy duty tire according to the present invention may include the tread (100), sidewalls, and a bead portion, and may further include a carcass, belts, and a rim.

The surface of the tread (100) may be formed with a plurality of ribs partitioned by grooves (110), and a reinforcement rib (120) may be positioned inside the groove (110).

Since the bead portion, carcass, belts, and rim are identical to those of a conventional heavy duty tire, detailed descriptions thereof will be omitted. Therefore, the following description will mainly focus on the reinforcement rib (120).

Referring to FIGS. 1 to 5, the heavy duty tire having at least one groove (110) formed in the tread (100) includes a reinforcement rib (120) inserted between a first sidewall (111) and a second sidewall (112) provided on both sides of the groove (110) and coupled to a bottom surface (110a) of the groove (110), and a hidden groove (170) formed between the first sidewall (111) or the second sidewall (112) and the reinforcement rib (120).

The groove (110) may include the first sidewall (111) and the second sidewall (112) on its inner sides. The reinforcement rib (120) may be inserted between the first sidewall (111) and the second sidewall (112) and coupled to the bottom surface (110a) of the groove (110).

Additionally, a portion of the reinforcement rib (120) may be configured to contact the first sidewall (111) and the second sidewall (112).

The reinforcement rib (120), being partially constrained by the first sidewall (111) and the second sidewall (112), can absorb braking force generated during vehicle braking, and can disperse driving force generated during vehicle driving, thereby inducing uniform wear of the tread (100) and preventing irregular wear.

Specifically, during vehicle driving, steering, acceleration, or deceleration, forces may act on the tread (100) from various directions, thereby deforming the groove (110) and potentially causing irregular wear on the tread (100). Therefore, the present invention forms the reinforcement rib (120) within the groove (110) to reduce the deformation of the groove (110), and because the reinforcement rib (120) is located between the first sidewall (111) and the second sidewall (112), it can evenly distribute concentrated forces and thereby induce uniform wear of the tread (100) and prevent irregular wear.

The first sidewall (111) may include a first contact portion (113) configured to contact the reinforcement rib (120) and having a curved shape corresponding to the shape of the reinforcement rib (120), thereby allowing the reinforcement rib (120) to be inserted into an upper portion of the first sidewall (111), and a first flow passage (114) formed between the reinforcement rib (120) and the first sidewall (111) to allow fluid to flow.

Referring to FIG. 2, the first contact portion (113) may contact an upper portion of the reinforcement rib (120), and if the reinforcement rib (120) is rounded to fit into the groove (110), the first sidewall (111) may be correspondingly curved inward.

Referring to FIG. 4, the first flow passage (114) may be formed between the reinforcement rib (120) and the first sidewall (111) and thus provide stable water absorption and drainage within the groove (110).

Similarly, the second sidewall (112) may include a second contact portion (115) configured to contact the reinforcement rib (120) and having a curved shape corresponding to the shape of the reinforcement rib (120), thereby allowing the reinforcement rib (120) to be inserted into an upper portion of the second sidewall (112), and a second flow passage (116) formed between the reinforcement rib (120) and the second sidewall (112) to allow fluid to flow.

Thus, the reinforcement rib (120) may be stably constrained by contacting the first contact portion (113) and the second contact portion (115), and coupled to the bottom surface (110a) of the groove (110).

The second flow passage (116) may also be formed between the second sidewall (112) and the reinforcement rib (120), thus allowing water absorption and drainage to be stably performed within the groove (110) together with the first flow passage (114).

The hidden groove (170) may be formed between the first sidewall (111) or the second sidewall (112) and the reinforcement rib (120).

Referring to FIG. 2, the hidden groove (170) may be formed at the bottom of the groove (110) and may be provided with a wider width than the groove (110) formed at the top. That is, the groove (100) in which the hidden groove (170) is formed is provided with a narrower width at the top, and the width at the bottom is provided wider than the width at the top due to the hidden groove (170).

Specifically, the hidden groove (170) may include a first hidden groove (130) formed between a portion of the first sidewall (111) and the reinforcement rib (120), and a second hidden groove (140) formed between a portion of the second sidewall (112) and the reinforcement rib (120).

Referring to FIG. 4, the first hidden groove (130) may be communicated with the first flow passage (114) and the second flow passage (116) so that fluid can flow therethrough, and similarly, the second hidden groove (140) may be communicated with the first flow passage (114) and the second flow passage (116).

Thus, although the reinforcement rib (120) reduces the volume of the groove (110) by occupying the space between the first sidewall (111) and the second sidewall (112), the first hidden groove (130) and the second hidden groove (140) can increase the water absorption capacity of the groove (110), thereby maintaining the reinforcing effect of the reinforcement rib (120) while enhancing the water absorption and drainage performance.

The reinforcement ribs (120) may be arranged at regular intervals along the circumferential direction of the tire.

Thus, when driving on a wet surface or in rainy conditions, water or rainwater can be efficiently drained through the first flow passage (114) and the second flow passage (116) formed between the reinforcement rib (120) and the sidewalls.

Meanwhile, referring to FIGS. 2 and 4, the width of the space where the first hidden groove (130) and the second hidden groove (140) are formed may be wider than the width at the upper portion where the first contact portion (113) and the second contact portion (115) are formed.

Specifically, the width at the bottom of the groove (110) may be narrower than the width of the space where the first hidden groove (130) and the second hidden groove (140) are located.

The height of the reinforcement rib (120) may be 70% to 95% of the height of the groove (110), and the protruding width of the reinforcement rib (120) may be 30% to 70% of the width of the groove (110).

Thus, by forming the reinforcement rib (120) with such height and width, it is possible to prevent foreign substances such as stones from being caught inside the groove (110) during vehicle driving.

The reinforcement rib (120) can prevent crack generation at the bottom surface (110a) of the groove (110), where cracks are prone to occur, and also prevent cracks at the junction areas between the bottom surface (110a) and the first sidewall (111) and the second sidewall (112).

Meanwhile, referring to FIG. 2, the height of the first hidden groove (130) may be lower than the height of the reinforcement rib (120), and the height of the first hidden groove (130) may correspond to the height of the groove (110) excluding the first contact portion (113).

Similarly, the height of the second hidden groove (140) may be lower than the height of the reinforcement rib (120), and the height of the second hidden groove (140) may correspond to the height of the groove (110) excluding the second contact portion (115).

Thus, the first hidden groove (130) and the second hidden groove (140) may be symmetrically formed on both sides of the reinforcement rib (120), and may have the same length, width, and volume.

The tread (100) may include a first rib (150) and a second rib (160) partitioned by the groove (110).

Referring to FIG. 2, the first sidewall (111) may be positioned below the first rib (150), and the second sidewall (112) may be positioned below the second rib (160).

The distance between the first rib (150) and the second rib (160) may be 1% to 50% of the width of the groove (110) where the first hidden groove (130) and the second hidden groove (140) are formed.

Moreover, in portions other than where the reinforcement rib (120) is disposed, the distance between the first rib (150) and the second rib (160) may be even narrower, allowing the first rib (150) and the second rib (160) to almost contact each other, thereby enhancing the pattern stiffness of the tread (100) during the early stage of wear.

Meanwhile, referring to FIG. 5, the first hidden groove (130) and the second hidden groove (140) may be configured to be exposed to the outside when the wear rate of the heavy duty tire reaches 50% to 60%.

Thus, during wear progression of the tread (100), the reinforcement rib (120) may remain between the first rib (150) and the second rib (160) with a slightly lower height, about 2 to 3 mm lower, thereby absorbing the force occurring between the ribs and preventing irregular wear.

Subsequently, when the wear rate exceeds 50% to 60%, the first hidden groove (130) and the second hidden groove (140) are exposed, and the reinforcement rib (120) remains between the ribs, thereby preventing the decrease in pattern stiffness and maintaining the tread stiffness until the later stages of wear.

Thus, according to the present invention, since the distance between the first rib (150) and the second rib (160) is very narrow compared to the lower part of the groove (110), it is possible to enhance the pattern stiffness of the tread (100) and prevent irregular wear even during mid-to-late wear stages, thereby maintaining the tread pattern stiffness for an extended period.

## Claims

1. A heavy duty tire having at least one groove formed in a tread, comprising:
a reinforcement rib inserted between a first sidewall and a second sidewall provided on both sides of the groove and coupled to a bottom surface of the groove; and
a hidden groove formed between the first sidewall or the second sidewall and the reinforcement rib.

2. The heavy duty tire according to claim 1, wherein the hidden groove comprises:
a first hidden groove formed between a portion of the first sidewall and the reinforcement rib; and
a second hidden groove formed between a portion of the second sidewall and the reinforcement rib.

3. The heavy duty tire according to claim 2, wherein at least a portion of the reinforcement rib is configured to be in contact with the first sidewall and the second sidewall.

4. The heavy duty tire according to claim 3, wherein the first sidewall includes:
a first contact portion configured to be in contact with the reinforcement rib and having a curved shape corresponding to a shape of the reinforcement rib so that the reinforcement rib can be inserted into an upper portion of the first sidewall; and
a first flow passage formed in a space spaced apart from the reinforcement rib by a predetermined distance and through which fluid can flow.

5. The heavy duty tire according to claim 4, wherein the second sidewall includes:
a second contact portion configured to be in contact with the reinforcement rib and having a curved shape corresponding to a shape of the reinforcement rib so that the reinforcement rib can be inserted into an upper portion of the second sidewall; and
a second flow passage formed in a space spaced apart from the reinforcement rib by a predetermined distance and through which fluid can flow.

6. The heavy duty tire according to claim 5, wherein the first hidden groove is communicated with the first flow passage and the second flow passage so that fluid can flow therethrough.

7. The heavy duty tire according to claim 5, wherein the second hidden groove is communicated with the first flow passage and the second flow passage so that fluid can flow therethrough.

8. The heavy duty tire according to claim 1, wherein a height of the reinforcement rib is 70% to 95% of a height of the groove.

9. The heavy duty tire according to claim 2, wherein the tread comprises:
a first rib and a second rib partitioned by the groove on a surface of the tread.

10. The heavy duty tire according to claim 9, wherein a distance between the first rib and the second rib is 1% to 50% of a width of the groove in which the first hidden groove and the second hidden groove are formed.

11. The heavy duty tire according to claim 2, wherein the first hidden groove and the second hidden groove are configured to be exposed to the outside when a wear rate of the heavy duty tire reaches 50% to 60%.
